# FASCICULE DE BREVET EUROPEEN

(11) **EP 1 109 687 B1**
(45) Date de publication et mention de la délivrance du brevet: **10.01.2007**
(21) Numéro de dépôt: 00948074.0
(22) Date de dépôt: 03.07.2000
(51) Int. Cl.: B60H 1/00, F16C 1/12, G05G 7/10

(54) **DISPOSITIF DE COMMANDE POUR EQUIPEMENT DE VEHICULE AUTOMOBILE**
STEUEREINRICHTUNG FÜR KRAFTFAHRZEUGAUSRÜSTUNG
DEVICE FOR CONTROLLING A MOTOR VEHICLE EQUIPMENT

(30) Priorité: 02.07.1999 FR 9908575
(43) Date de publication de la demande: 27.06.2001
(73) Titulaire: VALEO SYSTEMES THERMIQUES, 78321 Le Mesnil St Denis Cedex (FR)
(72) Inventeur: BERAUD, Henry, F-94300 Vincennes (FR); LACROIX, Louis, F-94500 Champigny sur Marne (FR); CREZE, Antoine, F-38420 Saint Jean Le Vieux (FR)
(86) Numéro de dépôt international: PCT/FR2000/001897
(87) Numéro de publication internationale: WO 2001/002202

(56) Documents cités:
- EP-A- 0 896 162
- DE-A- 4 420 161
- DE-U- 8 615 684
- US-A- 5 241 879

## Description

L'invention concerne un dispositif de commande pour un équipement de véhicule automobile tel que, par exemple, un appareil de chauffage et/ou climatisation de l'habitacle.

Elle concerne plus particulièrement un dispositif de commande du type comprenant un organe de liaison essentiellement allongé, dont l'une au moins des extrémités est pourvue d'un embout propre à être relié à un support mobile, en particulier à un levier.

Par l'expression "organe de liaison essentiellement allongé", on entend désigner ici un organe, tel qu'un câble, une bielle, ou analogue.

Dans un dispositif de commande de ce type, l'une des extrémités de l'organe de liaison est prévue pour être reliée à l'extrémité d'un support mobile, par exemple un levier pivotant actionné par un bouton de commande, tandis que l'autre extrémité de l'organe de liaison est prévue pour être reliée à l'extrémité d'un autre support mobile, par exemple un levier actionnant un organe mobile de l'équipement. Un tel dispositif et comme de US-A-5 241 879.

Dans le cas d'un appareil de chauffage et/ou climatisation de véhicule automobile, ce dernier levier sert le plus souvent à actionner un volet pivotant qui contrôle un flux d'air.

On connaît déjà différentes techniques pour relier l'extrémité d'un organe de liaison, en particulier d'un câble, avec ou sans embout, à un support mobile.

Il est connu par exemple de munir l'extrémité d'un câble d'un embout s'étendant dans une direction généralement perpendiculaire au câble et propre à être engagé dans une ouverture de forme correspondante aménagée dans le support mobile. Un tel dispositif est notamment décrit dans le document DE-U-8615684.

Une autre solution connue consiste à enrouler un câble, sans embout, autour d'un téton ou analogue que présente le support mobile et à assurer le maintien du câble par un moyen approprié, tel qu'un crochet, une attache, une languette, etc.

Il est connu aussi d'équiper l'extrémité d'un câble d'un embout serti comportant un oeillet ou un manchon propres à coopérer avec un téton, un plot ou analogue que comporte le support mobile. Un agencement de ce type est l'objet du document US 5241879.

Par ailleurs, il est connu aussi de munir un câble d'un embout, s'apparentant à un tonneau, constitué d'une galette cylindrique dont l'axe s'étend perpendiculairement à l'axe du câble. Cette galette est propre à se loger dans un cylindre creux présentant une rainure pour le passage du câble et une rainure pour le blocage de celui-ci par rotation.

Toutes ces solutions ont pour inconvénient d'orienter le câble suivant un deuxième degré de liberté en rotation et pour effet de tordre le câble en cas de désalignement des extrémités du câble, soit lors du montage, soit lors du fonctionnement.

Dans tous les cas, le montage de l'embout dans son logement nécessite plusieurs mouvements et entraîne des difficultés.

D'autre part, ces solutions entraînent parfois des jeux entre l'organe de liaison et le point d'attache de l'organe de liaison sur le support mobile.

L'invention a notamment pour but de surmonter les inconvénients précités, et plus particulièrement de permettre le montage direct de l'embout par encliquetage dans une direction verticale, sans rotation latérale ou verticale.

Elle vise notamment à procurer un dispositif de commande permettant un montage aisé et rapide de l'embout de l'organe de liaison dans le support mobile et assurant un maintien efficace de cet embout.

Elle vise également à procurer un tel dispositif de commande grâce auquel l'organe de liaison peut être monté libre en rotation à l'une ou l'autre de ses extrémités, de manière à empêcher tous risques de torsion en cas de désalignement des extrémités, que ce soit lors du montage ou lors du fonctionnement.

Elle vise également à procurer un tel dispositif de commande dont le montage peut être largement simplifié sur les chaînes de montage et de fabrication.

L'invention propose à cet effet un dispositif de commande du type défini en introduction, dans lequel le support mobile comprend une paroi latérale rattachée à un fond pour délimiter un logement de réception de l'embout et présentant une ouverture axiale pour l'introduction de l'embout et une ouverture latérale pour le passage de l'organe de liaison, ainsi que des moyens de retenue qui se déforment lors de l'introduction de l'embout dans le logement et qui reviennent ensuite vers une position de repos de manière à retenir l'embout dans le logement.

Ainsi, l'embout de l'organe de liaison est facilement introduit par l'ouverture axiale de la paroi latérale et est ensuite retenu dans le logement par les moyens de retenue.

Lors de l'introduction de l'embout, les moyens de retenue se déforment à partir de leur position de repos, et ils retournent ensuite vers leur position de repos lorsque l'embout est complètement introduit dans son logement. On réalise ainsi un montage à encliquetage qui facilite grandement l'introduction et la retenue de l'embout dans son logement.

En outre, la paroi latérale du support mobile définit une ouverture latérale qui permet le passage de l'organe de liaison et offre ainsi des degrés de liberté à cet organe de liaison.

Outre son montage, le démontage éventuel de l'organe de liaison est lui aussi facile.

Dans l'invention, l'embout de l'organe de liaison a avantageusement au moins en partie la forme générale d'une sphère offrant ainsi les degrés d'une articulation à rotule.

L'organe de liaison peut comporter soit deux embouts de forme sphérique, soit un embout de forme sphérique et un embout ayant une autre forme, par exemple cylindrique.

Par l'expression "paroi latérale", on entend désigner ici une paroi qui se rattache au fond du support mobile et qui peut être composée soit d'une seule partie, soit de plusieurs parties, à condition que cette paroi délimite d'une part une ouverture axiale pour l'introduction de l'embout et d'autre part une ouverture latérale pour le passage de l'organe de liaison. Le logement ainsi défini doit permettre d'accueillir une partie au moins de l'embout.

Dans le cas où l'embout de l'organe de liaison a la forme générale d'une sphère, cette paroi latérale définit intérieurement un logement adapté à cette sphère.

Dans une forme de réalisation de l'invention, la paroi latérale est interrompue localement pour définir l'ouverture latérale de passage de l'organe de liaison.

Dans une autre forme de réalisation de l'invention, la paroi latérale comprend des nervures érigées à partir de la paroi de fond et espacées entre elles. Ainsi, cette paroi latérale peut comprendre, de manière non limitative, deux nervures espacées angulairement d'environ 180° ou quatre nervures espacées angulairement d'environ 90°, ou encore trois nervures, les nervures, quel que soit leur nombre, étant espacées angulairement de manière à peu près uniforme.

Dans un premier mode général de réalisation de l'invention, la paroi latérale est sensiblement rigide, tandis que les moyens de retenue comprennent un organe déformable rattaché au support mobile et propre à occuper une position de repos en laquelle il ferme au moins en partie l'ouverture axiale du logement et une position déformée en laquelle il libère l'ouverture axiale du logement pour permettre l'introduction de l'embout.

Cet organe déformable peut être réalisé notamment sous la forme d'une patte coudée ayant une extrémité rattachée au support mobile et une extrémité libre s'étendant en travers de l'ouverture axiale du logement.

En variante, l'organe déformable est réalisé sous la forme d'un arceau ayant deux extrémités rattachées au support mobile de part et d'autre du logement et une partie centrale s'étendant en travers de l'ouverture axiale du logement.

Dans un autre mode général de réalisation de l'invention, la paroi latérale est divisée en nervures espacées et déformables élastiquement, les moyens de retenue étant alors formés par des extrémités libres des nervures qui sont susceptibles de s'écarter lors de l'introduction de l'embout dans le logement et de se rapprocher ensuite élastiquement pour s'opposer au retrait de l'embout.

Avantageusement, ces nervures ont des faces intérieures à pente négative qui vont en s'évasant en direction du fond du logement, ou des faces parallèles avec des saillies localisées pour assurer un accrochage.

Dans tous les cas, le montage est rapide et le dispositif permet une bi-stabilité de l'encliquetage: il n'y a pas de risque d'encliquetage "à moitié". En cas de nécessité, le démontage est également aisé.

De préférence, les extrémités libres des nervures comprennent un chanfrein intérieur propre à faciliter l'introduction de l'embout dans le logement.

Dans les différentes formes de réalisation précitées, la paroi latérale et les moyens de retenue sont avantageusement venus de moulage avec le support mobile.

L'organe de liaison de l'invention est de préférence un câble ou une bielle.

Dans la description qui suit, faite seulement à titre d'exemple, on se réfère aux dessins annexés, sur lesquels :
- la figure 1 est une représentation schématique d'un dispositif selon l'invention appliqué à la commande d'un volet rotatif faisant partie d'un appareil de chauffage et/ou de climatisation de véhicule automobile;
- la figure 2 est une vue partielle en perspective d'un dispositif de commande dans une première forme de réalisation de l'invention, dite à arceau et nervures ;
- la figure 3 est une vue de dessus correspondant à la figure 2 ;
- la figure 4 est une vue en coupe selon la ligne IV-IV de la figure 3;
- les figures 5A à 5D sont des vues en perspective montrant la mise en place de l'embout de l'organe de liaison dans le support mobile par pliage ou inclinaison de l'arceau ;
- la figure 6 est une vue partielle de dessus d'un dispositif de commande selon une deuxième forme de réalisation de l'invention à arceau et murets ;
- la figure 7 est une vue partielle de dessus d'un dispositif de commande selon une troisième forme de réalisation de l'invention à arceau et murets ;
- la figure 8 est une vue en perspective d'un dispositif de commande selon une quatrième forme de réalisation de l'invention à crochet de maintien ;
- la figure 9 est une vue en coupe selon la ligne IX-IX de la figure 8 ;
- la figure 10 est une vue partielle en perspective d'un dispositif de commande selon une cinquième forme de réalisation de l'invention, dite à crochets, ceux-ci étant au nombre de 4 dans l'exemple particulier ;
- la figure 11 est une vue de dessus correspondant à la figure 10; et
- la figure 12 est une vue en coupe selon la ligne XII-XII de la figure 11.

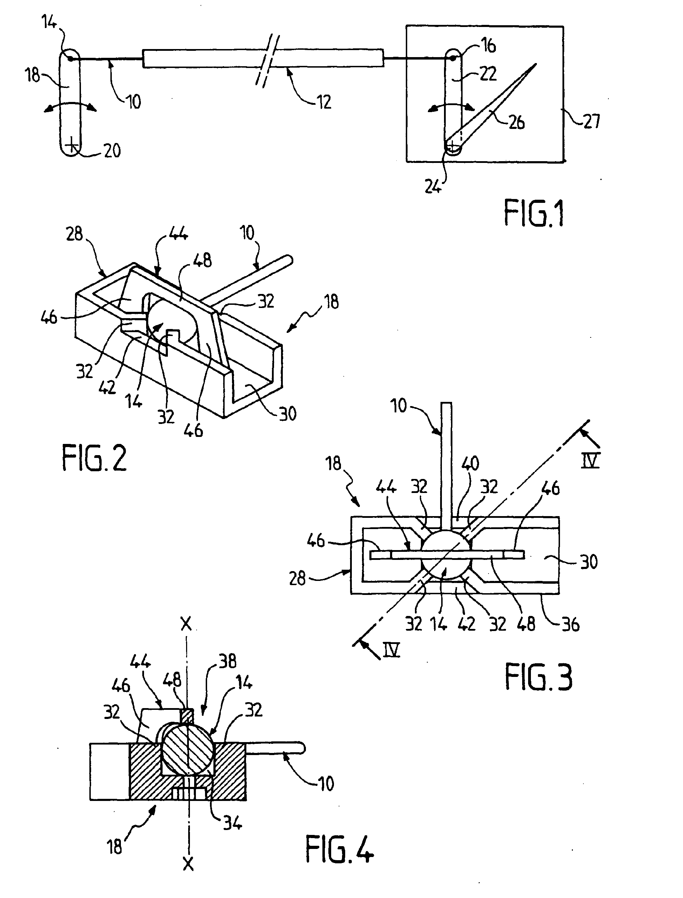

Le dispositif représenté à la figure 1 comprend un organe de liaison 10 qui, dans l'exemple, est réalisé sous la forme d'un câble déformable. Ce câble est monté coulissant à l'intérieur d'une gaine 12 et pourvu de deux embouts 14 et 16 à ses deux extrémités. L'embout 14 est relié à l'extrémité d'un support mobile 18 constitué ici d'un levier monté pivotant autour d'un axe 20. L'embout 16 est relié à l'extrémité d'un support mobile 22 constitué ici d'un levier monté pivotant autour d'un axe 24.

Le support mobile 18 constitue un actionneur qui peut être entraîné en rotation dans un sens ou dans l'autre, autour de l'axe 20 par des moyens appropriés (non représentés). Le support mobile 22 est ainsi entraîné en rotation dans un sens ou dans l'autre autour de l'axe 24. Dans l'exemple, le support mobile 22 est solidaire en rotation d'un volet 26 propre à faire partie d'une installation 27 de chauffage et/ou climatisation de véhicule automobile pour contrôler le passage d'un flux d'air.

On se réfère aux figures 2 à 4 pour décrire une première forme de réalisation de l'invention.

Le support mobile 18 comprend une extrémité 28 aménagée pour recevoir l'embout 14 du câble 10, cet embout ayant dans l'exemple une forme généralement sphérique.

L'extrémité 28 du support 18 comporte un fond 30 à partir duquel sont érigées quatre nervures 32 espacées angulairement à 90° par rapport à un axe central X-X (figure 4) passant par le centre de l'embout 14. Ces quatre nervures 32 constituent ensemble une paroi latérale qui délimite un logement 34 (figure 4) propre à recevoir l'embout 14 du câble. Par ailleurs, les quatre nervures 32 se rattachent à un bord latéral 36 du levier 18. Le logement 34 est fermé d'un côté par le fond 30 et présente, de l'autre côté, une ouverture 38 pour permettre l'introduction de l'embout 14 dans la direction de l'axe X-X.

On remarquera que deux des nervures 32 délimitent une ouverture latérale 40 pour le passage du câble 10 (figure 3). Il est à noter qu'une autre ouverture latérale 42 est prévue, ce qui permet une autre possibilité de montage du câble de l'autre côté du support mobile 18.

Pour maintenir l'embout 14 dans le logement 34, le support mobile comprend en outre un organe déformable 44 réalisé sous la forme d'un arceau ayant deux extrémités 46 rattachées au support mobile de part et d'autre du logement 34 et une partie centrale 48 s'étendant en travers de l'ouverture axiale 38 du logement 34 (figures 2 et 3).

Dans l'exemple, les quatre nervures 32, ainsi que l'arceau 44 sont venus de moulage avec le support mobile et réalisés avantageusement en une matière plastique offrant une certaine souplesse pour permettre la déformation de l'arceau. On remarquera que, dans la position normale (ou position de repos), cet arceau s'étend dans un plan perpendiculaire au fond 18 et situé à 45° par rapport aux nervures 32.

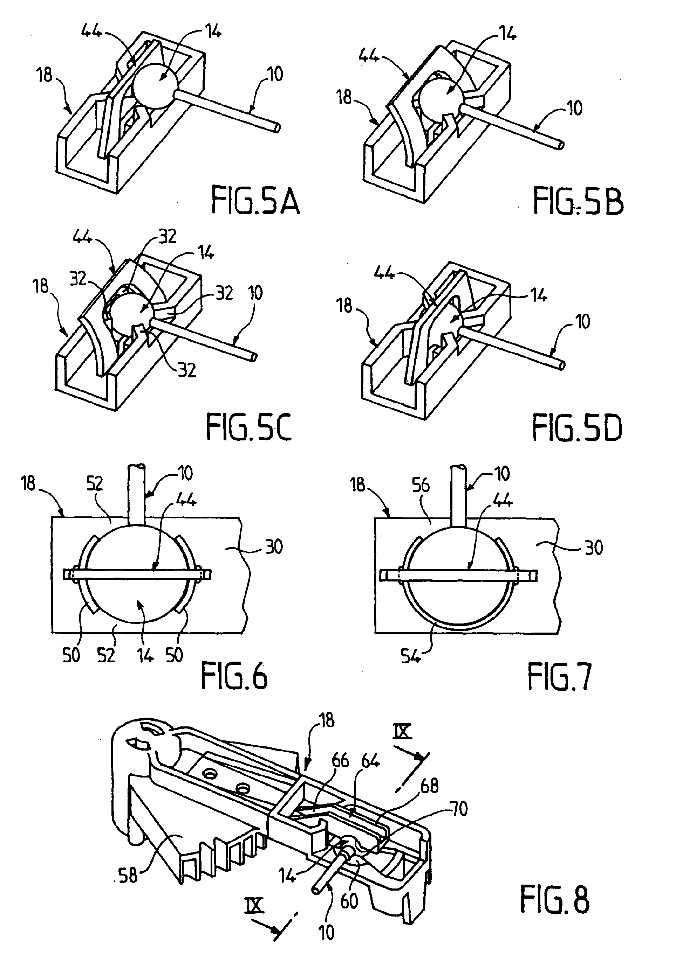

Pour permettre l'introduction de l'embout 14 dans le logement, on présente cet embout contre l'arceau 44 (figure 5A) et l'on fléchit cet arceau (figure 5B) pour libérer l'accès du logement. Ensuite, il suffit d'emboîter l'embout 14 en le déplaçant dans la direction de l'axe X-X, comme montré par la figure 5C. L'embout se trouve alors dans le logement et vient en appui contre le fond 30 du support mobile. Du fait de l'élasticité de la matière plastique, l'arceau revient dans sa position initiale de repos et vient ainsi fermer en partie l'ouverture axiale 38. L'arceau constitue ainsi des moyens de retenue qui empêchent l'embout de sortir de son logement (figure 5D). Ainsi la mise en place de l'embout s'effectue par deux mouvements successifs de translation perpendiculaires entre eux.

On se réfère maintenant à la figure 6 qui montre une autre forme de réalisation de l'invention s'apparentant à la forme de réalisation précédente.

La principale différence réside dans le fait que la paroi latérale est ici formée de deux nervures 50, en forme d'arc de cercle, espacées angulairement à 180°. Les moyens de retenue comprennent, comme dans la forme de réalisation précédente, un arceau déformable 44 analogue.

Les deux nervures 50 délimitent entre elles deux ouvertures latérales 52 pour le passage du câble, offrant ainsi deux possibilités de montage symétriques pour le câble.

Dans la forme de réalisation de la figure 7, qui s'apparente étroitement à celle de la figure 6, le support mobile comprend une seule paroi latérale 54 de forme cylindrique interrompue localement pour définir une ouverture latérale 56 de passage du câble, offrant ainsi une seule possibilité de montage. Comme dans la forme de réalisation précédente, l'embout 14 est retenu dans le logement par un arceau 44 analogue.

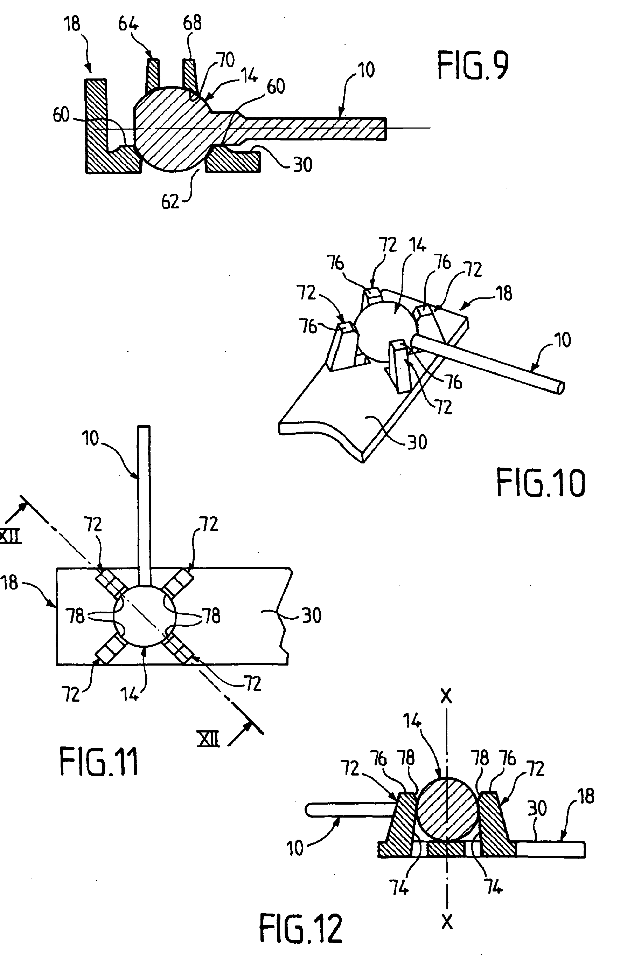

Dans la forme de réalisation des figures 8 et 9, le support mobile 18 est solidaire d'un secteur denté 58 propre à coopérer avec un pignon d'entraînement (non représenté). Le support mobile 18 comprend un fond 30 dont dépendent deux nervures opposées 60 en forme d'arcs de cercle qui contribuent à définir un siège sensiblement tronconique pour recevoir l'embout sphérique 14 du câble. Ces deux nervures ménagent entre elles un espace libre 62 servant au démoulage d'un organe déformable 64 rattaché au support mobile et jouant la fonction de l'arceau des deux formes de réalisation précédentes.

Toutefois, cet organe déformable 64 est ici réalisé sous la forme d'une patte coudée qui a une extrémité 66 rattachée au support (figure 8) et une extrémité libre 68 s'étendant en travers de l'ouverture axiale du logement défini par les nervures 60. Cette extrémité libre 68 s'étend dans une direction sensiblement parallèle au fond 30. Elle est aménagée pour définir un siège 70 de forme sensiblement tronconique (figure 9) propre à appuyer sur l'embout sphérique 14 du côté opposé au siège défini par les nervures 60.

Les nervures 62 et la patte coudée 64 sont venues de moulage avec le support mobile et sont réalisées dans une matière plastique déformable, autorisant un déplacement de la patte coudée 64 pour dégager l'ouverture axiale du logement et permettre la mise en place de l'embout du câble. Après sa mise en place, la patte revient à sa position initiale de repos et empêche la sortie de l'embout qui est ainsi retenu dans son logement. Le support mobile peut être réalisé en deux pièces ou en une seule pièce.

La mise en place de l'embout s'effectue ainsi également par deux mouvements perpendiculaires successifs.

Dans la forme de réalisation des figures 10 à 12, la paroi latérale du support mobile 18 comprend quatre nervures 72 espacées angulairement à 90° les unes des autres et déformables élastiquement. Ces quatre nervures forment en même temps des moyens de retenue pour retenir l'embout 14 dans le logement ainsi défini.

Pour cela, les nervures 32 ont des faces intérieures respectives 74 à pentes négatives, c'est-à-dire inclinées par rapport à l'axe X-X (figure 12). Autrement dit, ces faces intérieures vont en s'évasant en direction du fond 30 et contribuent à définir un logement ayant une forme généralement tronconique facilitant la retenue de l'embout dans le logement. Ce sont donc les extrémités libres 76 des nervures qui forment plus particulièrement ces moyens de retenue. Ces extrémités libres sont susceptibles de s'écarter radialement, à partir d'une position de repos, lors de l'introduction de l'embout dans le logement dans la direction de l'axe X-X. Pour faciliter cet écartement, chacune des extrémités libres 76 comprend un chanfrein intérieur 78.

L'ensemble des quatre chanfreins 78 définit une sorte de siège tronconique recevant l'embout et facilitant son insertion.

Ainsi, alors que dans les formes de réalisation précédentes, il fallait introduire l'embout suivant deux mouvements perpendiculaires, dans cette forme de réalisation, l'introduction de l'embout se fait suivant un seul mouvement linéaire, dans la direction de l'axe X-X.

Les nervures 72 définissent entre elles deux ouvertures latérales pour le passage du câble, offrant ainsi deux possibilités de montage.

On notera que l'embout du câble est sollicité dans la direction du câble, c'est-à-dire perpendiculairement à l'axe X-X, ce qui fait que cet embout ne risque pas de sortir accidentellement de son logement.

Dans les différentes formes de réalisations décrites, la force nécessaire au montage est la plus faible possible, alors que la force nécessaire pour arracher l'embout de son logement est la plus forte possible. On réalise ainsi une séparation optimale entre la force de montage et la force d'arrachement.

Bien entendu, l'invention n'est pas limitée aux formes de réalisation décrites précédemment à titre d'exemple et s'étend à d'autres variantes.

Ainsi, il est possible de concevoir un organe de liaison présentant un embout ayant par exemple une forme cylindrique autorisant un mouvement de rotation suivant l'axe X-X précité. En ce cas, il sera préférable que l'autre embout de l'organe de liaison ait une forme sphérique pour pouvoir compenser les mouvements de torsion de l'organe de liaison.

En outre, l'organe de liaison n'est pas limité à un câble et il peut être formé de tout autre organe essentiellement allongé, et notamment d'une bielle.

L'invention s'applique plus particulièrement à la commande de volets mobiles dans des appareils de chauffage et/ou climatisation de véhicule automobile.

## Revendications

1. Dispositif de commande pour équipement de véhicule automobile, comprenant un organe de liaison (10) essentiellement allongé, dont l'une au moins des extrémités est pourvue d'un embout (14 ; 16) propre à être relié à un support mobile (18), en particulier un levier, comprenant une paroi latérale (32 ; 50 ; 54 ; 60 ; 72) rattachée à un fond (30) pour délimiter un logement (34) de réception de l'embout (14 ; 16) et présentant une ouverture axiale (38) pour l'introduction de l'embout, et des moyens de retenue (44 ; 64) de l'embout (14 ; 16) dans le logement (34) **caractérisé en ce que** le support mobile comporte au moins une ouverture latérale (40 ; 42 ; 52 ; 56) pour le passage de l'organe de liaison (10) et les moyens de retenue (44 ; 64) occupent une position de repos dans laquelle ils ferment au moins en partie l'ouverture axiale (38) du logement (34) et une position déformée en laquelle ils libèrent l'ouverture axiale (38) du logement pour permettre l'introduction de l'embout (14).

2. Dispositif selon la revendication 1, **caractérisé en ce que** l'embout (14) de l'organe de liaison (10) a au moins en partie la forme générale d'une sphère.

3. Dispositif selon l'une des revendications 1 et 2, **caractérisé en ce que** la paroi latérale (54) est interrompue localement pour définir l'ouverture latérale (56) de passage de l'organe de liaison (10).

4. Dispositif selon l'une des revendications 1 et 2, **caractérisé en ce que** la paroi latérale comprend des nervures (32 ; 50 ; 60 ; 72) érigées à partir de la paroi de fond (30) et espacées entre elles.

5. Dispositif selon la revendication 4, **caractérisé en ce que** le nombre desdites nervures est compris entre 2 et 4, celles-ci étant espacées angulairement de manière à peu près uniforme.

6. Dispositif selon l'un des revendications précédentes, **caractérisé en ce que** l'organe déformable est réalisé sous la forme d'une patte coudée (64) ayant une extrémité (66) rattachée au support mobile (18) et une extrémité libre (68) s'étendant en travers de l'ouverture axiale du logement.

7. Dispositif selon l'un des revendications précédentes, **caractérisé en ce que** l'organe déformable est réalisé sous la forme d'un arceau (44) ayant deux extrémités (46) rattachées au support mobile de part et d'autre du logement et une partie centrale (48) s'étendant en travers de l'ouverture axiale du logement.

8. Dispositif selon l'une des revendications 1 à 5, **caractérisé en ce que** la paroi latérale est divisée en nervures (72) espacées et déformables élastiquement, et **en ce que** les moyens de retenue sont formés par des extrémités libres (76) des nervures qui sont susceptibles de s'écarter lors de l'introduction de l'embout (14) dans le logement et de se rapprocher ensuite élastiquement pour s'opposer au retrait de l'embout.

9. Dispositif selon la revendication 8, **caractérisé en ce que** les nervures (72) ont des faces intérieures (74) à pente négative qui vont en s'évasant en direction du fond (30) du logement.

10. Dispositif selon l'une des revendications 8 et 9, **caractérisé en ce que** les extrémités libres (76) des nervures (76) comprennent un chanfrein intérieur (78) propre à faciliter l'introduction de l'embout (14) dans le logement.

11. Dispositif selon l'une des revendications 1 à 10, **caractérisé en ce que** la paroi latérale (32 ; 50 ; 54 ; 60; 72) et les moyens de retenue (44 ; 64 ; 76) sont venus de moulage avec le support mobile (18).

12. Dispositif selon l'une des revendications 1 à 11, **caractérisé en ce que** l'organe de liaison (10) est un câble.

13. Dispositif selon l'une des revendications 1 à 11, **caractérisé en ce que** l'organe de liaison (10) est une bielle.

## Claims

1. Command device for automobile vehicle equipment, comprising an essentially elongated connecting element (10), of which at least one of the ends is fitted with an end piece (14; 16) that can be connected to a mobile support (18), especially a lever, comprising a lateral wall (32; 50; 54; 60; 72) attached to a base (30) to define a housing (34) to accommodate the end piece (14, 16) and which has an axial orifice (38) to insert the end piece, to pass through and means (44; 64) of retaining the end piece (14; 16) in the housing (34),
**characterised in that** the mobile support comprises at least one lateral orifice (40; 42; 52; 56) for the connecting element (10) and the mobile support and the retention means (44; 64) occupy a rest position in which they seal at least partially the axial orifice (38) of the housing (34) and a deformed position in which they free the axial orifice (38) of the housing to allow the end piece (14) to be inserted.

2. Device of claim 1, **characterised in that** the end piece (14) of the connecting element (10) has at least partially the general form of a sphere.

3. Device of any of claims 1 or 2, **characterised in that** the lateral wall (54) is interrupted locally to define the lateral orifice (56) through which the connecting element (10) passes.

4. Device of any of claims 1 or 2, **characterised in that** the lateral wall comprises ribs (32; 50; 60; 72) rising from the base (30) and spaced out from one another.

5. Device of claim 4, **characterised in that** the number of the said ribs is between 2 and 4, and they are angularly spaced so that they are substantially uniform.

6. Device of any of the previous claims, **characterised in that** the deformable element is made in the form of an angled bracket (64) with one end (66) attached to the mobile support (18) and one free end (68) extending through the axial orifice of the housing.

7. Device of any of the previous claims, **characterised in that** the deformable element is made in an arch shape (44) with two ends (46) attached to the mobile support on either side of the housing and a central portion (48) extending through the axial orifice of the housing.

8. Device of any of claims 1 to 5, **characterised in that** the lateral wall is divided into ribs (72) spaced out and elastically deformable, and **in that** the retention means are formed by free ends (76) of the ribs that are capable of moving apart when the end piece (14) is inserted into the housing and then moving back together elastically to oppose the withdrawal of the end piece.

9. Device of claim 8, **characterised in that** the ribs (72) have inside faces (74) with a negative slope which open out towards the base (30) of the housing.

10. Device of any of claims 8 or 9, **characterised in that** the free ends (76) of the ribs (76) comprise an inside chamfer (78) capable of facilitating the introduction of the end piece (14) in the housing.

11. Device of any of claims 1 to 10, **characterised in that** the lateral wall (32; 50; 54; 60; 72) and the retention means (44; 64; 76) are moulded along with the mobile support (18).

12. Device of any of claims 1 to 11, **characterised in that** the connecting element (10) is a cable.

13. Device of any of claims 1 to 11, **characterised in that** the connecting element (10) is a connecting rod.

## Patentansprüche

1. Steuervorrichtung für Ausrüstung eines Kraftfahrzeugs, die ein Verbindungselement (10) umfasst, das im wesentlichen verlängert ist und bei dem mindestens ein Ende mit einem Ansatz (14; 16) versehen ist, der mit einem beweglichen Träger (18) verbunden werden kann, insbesondere einem Hebel, mit einer Seitenwand (32; 50; 54; 60; 72), die an einem Boden (30) befestigt ist, zur Begrenzung einer Aufnahme (34) für den Ansatz (14; 16) und die eine axiale Öffnung (38) aufweist, zur Einführung des Ansatzes und Mittel (44; 46) zur Befestigung des Ansatzes (14; 16) in der Aufnahme (34), **dadurch gekennzeichnet, dass** der bewegliche Träger mindestens eine seitliche Öffnung (40; 42; 52; 56) zur Durchführung des Verbindungsmittels (10) und die Befestigungsmittel (44; 64) eine Ruheposition einnehmen, in der sie zumindest teilweise die axiale Öffnung (38) der Aufnahme (34) schließen und eine verformte Position, in der sie die axiale Öffnung (38) der Aufnahme freigeben, um die Einführung des Ansatzes (14) zu ermöglichen.

2. Vorrichtung gemäß Anspruch 1, **dadurch gekennzeichnet, dass** der Ansatz (14) des Verbindungselementes (10) zumindest teilweise die allgemeine Form einer Kugel aufweist.

3. Vorrichtung gemäß einem der Ansprüche 1 und 2, **dadurch gekennzeichnet, dass** die Seitenwand (54) lokal unterbrochen ist, zur Festlegung der seitlichen Öffnung (56) zur Durchführung des Verbindungselementes (10).

4. Vorrichtung gemäß einem der Ansprüche 1 und 2, **dadurch gekennzeichnet, dass** die Seitenwand Rippen (32; 50; 60; 72) umfasst, die durch die Bodenwand (30) aufgerichtet werden und mit Abstand zueinander liegen.

5. Vorrichtung gemäß Anspruch 4, **dadurch gekennzeichnet, dass** die Anzahl der besagten Rippen zwischen 2 und 4 beträgt, wobei die Rippen mit fast einheitlichem Abstand winklig zueinander liegen.

6. Vorrichtung gemäß einem der vorherigen Ansprüche, **dadurch gekennzeichnet, dass** das verformbare Element in Form einer abgewinkelten Lasche (64) ausgeführt wurde und ein Ende (66) aufweist, das an dem beweglichen Träger (18) befestigt ist und ein freies Ende (68) das durch die axiale Öffnung der Aufnahme verläuft.

7. Vorrichtung gemäß einem der vorherigen Ansprüche, **dadurch gekennzeichnet, dass** das verformbare Element in Form einer Wölbung (44) ausgeführt ist, mit zwei Enden (46), die auf der einen und anderen Seite der Aufnahme an dem beweglichen Träger befestigt sind und einem mittleren Teil (48), der durch die axiale Öffnung der Aufnahme verläuft.

8. Vorrichtung gemäß einem der Ansprüche 1 bis 5, **dadurch gekennzeichnet, dass** die Seitenwand in Rippen (72) unterteilt ist, die im Abstand zueinander liegen und elastisch verformbar sind und **dadurch**, dass die Befestigungsmittel durch freie Enden (76) der Rippen gebildet werden, die sich während der Einführung des Ansatzes (14) in die Aufnahme spreizen können und sich dann elastisch zusammenziehen, um eine Wegnahme des Ansatzes zu verhindern.

9. Vorrichtung gemäß Anspruch 8, **dadurch gekennzeichnet, dass** die Rippen (72) Innenflächen (74) mit negativer Neigung haben, die so verlaufen indem sie sich in Richtung des Bodens (30) der Aufnahme ausweiten.

10. Vorrichtung gemäß einem der Ansprüche 8 und 9, **dadurch gekennzeichnet, dass** die freien Enden (76) der Rippen (76) eine innere Abschrägung (78) haben, welche die Einführung des Ansatzes (14) in die Aufnahme erleichtern kann.

11. Vorrichtung gemäß einem der Ansprüche 1 bis 10, **dadurch gekennzeichnet, dass** die Seitenwand (32; 50; 54; 60; 72) und die Befestigungsmittel (44; 64; 76) mit dem beweglichen Träger (18) gegossen sind.

12. Vorrichtung gemäß einem der Ansprüche 1 bis 11, **dadurch gekennzeichnet, dass** das Verbindungselement (10) ein Kabel ist.

13. Vorrichtung gemäß einem der Ansprüche 1 bis 11, **dadurch gekennzeichnet, dass** das Verbindungselement (10) eine Kurbelstange ist.
